(19) Europäisches Patentamt
European Patent Office
Office européen des brevets

(11) **EP 2 671 893 A1**

(12) **EUROPÄISCHE PATENTANMELDUNG**

(43) Veröffentlichungstag:
**11.12.2013 Patentblatt 2013/50**

(21) Anmeldenummer: **12170955.4**

(22) Anmeldetag: **06.06.2012**

(51) Int Cl.:
*C08F 8/32* (2006.01)    *C08F 290/06* (2006.01)
*C08G 18/50* (2006.01)    *C08G 18/32* (2006.01)
*C08G 18/38* (2006.01)    *C08G 65/26* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Bayer MaterialScience AG
51373 Leverkusen (DE)**

(72) Erfinder:
• **Lorenz, Klaus
41539 Dormagen (DE)**
• **Hofmann, Jörg
47800 Krefeld (DE)**
• **Nefzger, Hartmut
50259 Pulheim (DE)**

(54) **Verfahren zur Herstellung von Omega-Hydroxy-Aminopolymeren**

(57)    Gegenstände der vorliegenden Erfindung sind ein Doppelmetallcyanid-katalysiertes Verfahren zur Herstellung von ω-Hydroxy-Aminopolymeren, die durch das Verfahren erhältlichen ω-Hydroxy-Aminopolymere sowie die Verwendung der erfindungsgemäßen ω-Hydroxy-Aminopolymere zur Herstellung von Polyurethanharnstoffpolymeren. In einem ersten Schritt des erfindungsgemäßen Verfahrens erfolgt die Doppelmetallcyanidkatalysierte Addition von Epoxiden an aktive Wasserstoffatome tragende, elektronenarme Doppelbindungen enthaltende Starterverbindungen. In einem zweiten Schritt werden die so erhaltenen Additionsverbindungen mit primären Aminen umgesetzt.

EP 2 671 893 A1

**Beschreibung**

Gegenstände der vorliegenden Erfindung sind ein Doppelmetallcyanid-katalysiertes Verfahren zur Herstellung von ω-Hydroxy-Aminopolymeren, die durch das Verfahren erhältlichen ω-Hydroxy-Aminopolymere sowie die Verwendung der erfindungsgemäßen ω-Hydroxy-Aminopolymere zur Herstellung von Polyurethanharnstoffpolymeren. In einem ersten Schritt des erfindungsgemäßen Verfahrens erfolgt die Doppelmetallcyanidkatalysierte Addition von Epoxiden an aktive Wasserstoffatome tragende, elektronenarme Doppelbindungen enthaltende Starterverbindungen. In einem zweiten Schritt werden die so erhaltenen Additionsverbindungen mit primären Aminen umgesetzt.

Im Allgemeinen kann die Aminofunktionalität von ω-Hydroxy-Aminopolymeren über die Addition von primären Aminen oder Ammoniak an elektronenarme Doppelbindungen, beispielsweise vom (Meth-)Acylattyp, in Makromoleküle eingeführt werden. Die Addition von Aminen an (Meth-)Acrylatgruppen-haltige Polymere, u. a. an (Meth-)Acrylatgruppen-haltige Polyether, ist an sich bekannt; beispielsweise werden solche Verfahren in US-A-5,739,192, US-A-5,597,390, US-A-2005/0171002, DE-A-9616984, DE-A-19508308, WO-A-2010/090345, JP-A-200922753 und JP-A-04089860 erwähnt. Der Erhalt der die elektronenarmen Doppelbindungen enthaltenden Vorläuferverbindungen ist im Stand der Technik entweder nicht beschrieben oder erfolgt über nach statistischen Gesetzmäßigkeiten ablaufenden Kondensationsreaktionen, beispielsweise über die Veresterung von Acrylsäure mit mehrfunktionellen Polyethern oder die Umsetzung von Acryloylchlorid bzw. von Acrylsäureestern niedermolekularer Monole mit difunktionellen Polyethern. Aufgrund dieser statistischen Gesetzmäßigkeiten sind die Strukturen der nach dem Stand der Technik erhältlichen ω-Hydroxy-Aminopolymere nicht wohldefiniert, außerdem erweist es sich regelmäßig als schwierig solche Kondensationsreaktionen zu ausreichend hohen Umsetzungsgraden voranzutreiben.

Es bestand daher ein Bedarf nach einem einfachen, möglichst aufarbeitungsfreien Verfahren für die Herstellung wohldefinierter und für die Herstellung von Polyurethanharnstoffpolymeren gut geeigneter ω-Hydroxy-Aminopolymere, das sich durch die Abwesenheit jeglicher Zwangsanfallsprodukte, wie beispielsweise von Destillaten bei Ver- oder Umesterungsreaktionen, auszeichnet. Unter "wohldefiniert" wird im Sinne der vorliegenden Erfindung verstanden, dass die verwendeten Reaktionsschritte keinen statistischen Gesetzmäßigkeiten unterliegen und die Zahl der in einem ω-Hydroxy-Aminopolymermolekül enthaltenen Amino- und Hydroxygruppen bekannt ist.

Überraschenderweise wurde gefunden, dass für die Herstellung von Polyurethanharnstoffpolymeren besonders gut geeignete und wohldefinierte ω-Hydroxy-Aminopolymere erhalten werden können, indem man die die elektronenarmen Doppelbindungen tragenden polymeren Vorläuferverbindungen über Doppelmetallcyanid-(DMC-)katalysierte Addition von Epoxiden und ggf. weiteren geeigneten Co-Monomeren wie beispielsweise Lactonen, cyclischen Carbonsäureanhydriden, Lactiden, cyclischen Carbonaten oder Kohlendioxid an geeignete, hydroxygruppenhaltige Vorläuferverbindungen mit elektronenarmen Doppelbindungen herstellt, und diese danach mit primären Aminen zur Umsetzung bringt.

Die Direktherstellung von (Meth-)acrylatgruppen-haltigen Polyethern über Doppelmetallcyanidkomplex-(DMC-)katalysierte Addition von Alkylenoxiden und ggf. oxirangruppenhaltigen (Meth-)Acrylsäurederivaten an Acryl oder Methacrylsäure oder an hydroxygruppenhaltige Derivate der Acryl- bzw. Methacrylsäure ist beispielsweise beschrieben in WO-A-99/10407, WO-A-2008(049471 und EP-A-1 873 186. Diese Anmeldeschriften legen die Verwendung dieser Verbindungen als Zementadditive, Makromonomere oder Komponenten UV-härtbarer Beschichtungssysteme nahe; auf die Addition von Aminen an die elektronenarmen Doppelbindungen zum Zweck des Erhalts von ω-Hydroxy-Aminopolymeren wird nicht eingegangen.

Ein Gegenstand der vorliegenden Erfindung ist somit ein Verfahren zur Herstellung eines ω-Hydroxy-Aminopolymers, umfassend die Schritte

(I) Addition eines Epoxids an eine Starterverbindung **S-I** mit wenigstens einem aktiven Wasserstoffatom und wenigstens einer elektronenarmen Doppelbindung in Gegenwart eines Doppelmetallcyanid-Katalysators;
(II) Umsetzung des in Schritt (I) erhaltenen Additionsprodukts **P-I** mit einem primären Amin.

Weitere Gegenstände der vorliegenden Erfindung sind die nach dem erfindungsgemäßen Verfahren erhältlichen ω-Hydroxy-Aminopolymere und deren Verwendung bei der Herstellung von Polyurethanharnstoffpolymeren sowie die so erhältlichen Polyurethanharnstoff polymere.

Die Verwendung des Worts *ein* im Zusammenhang mit zählbaren Größen ist hierbei und im Folgenden nur dann als Zahlwort zu verstehen, wenn dies aus dem Zusammenhang hervorgeht (bspw. durch die Formulierung "*genau ein*"). Ansonsten umfassen Ausdrücke wie "ein Epoxid", "eine Starterverbindung" etc. immer auch solche Ausführungsformen, in denen zwei oder mehr Epoxide, zwei oder mehr Starterverbindungen etc. eingesetzt werden.

Unter *Verbindungen mit aktiven Wasserstoffatomen* oder *H-funktionellen Verbindungen* sind im Sinne der vorliegenden Erfindung Verbindungen zu verstehen, die mindestens ein Zerewitinoff-aktives Wasserstoffatom enthalten. Ein an C, N, O, oder S gebundener Wasserstoff wird als Zerewitinoff-aktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl- oder Thiol-Gruppen als funktionelle Gruppen enthalten.

Unter *elektronenarmen Doppelbindungen* sind im Sinne der vorliegenden Erfindung olefinische Doppelbindungen zu verstehen, die sich in Konjugation mit einer oder mehreren elektronenziehenden funktionellen Gruppen, bevorzugt vom Carbonyl-, Carbonsäureester-, Carbonsäureamid-, Carbonsäure-, Nitro- oder Nitriltyp befinden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Für die Herstellung des Additionsprodukts P-I (der Polyolvorstufe mit elektronenarmen Doppelbindungen) **in Schritt (I)** geeignete DMC-Katalysatoren sind im Prinzip aus dem Stand der Technik bekannt (siehe z.B. US-A-3,404,109, US-A-3,829,505, US-A-3,941,849 und US-A-5,158,922). DMC-Katalysatoren, die z. B. in US-A-5,470,813, EP-A-0 700 949, EP-A-0 743 093, EP-A-0 761 708, WO 97/40086, WO 98/16310 und WO 00/47649 beschrieben sind, besitzen eine sehr hohe Aktivität in der Polymerisation von Epoxiden und ggf. der Co-Polymerisation von Epoxiden mit geeigneten Co-Monomeren wie beispielsweise Lactonen, cyclischen Carbonsäureanhydriden, Lactiden, cyclischen Carbonaten oder Kohlendioxid und ermöglichen die Herstellung von polymeren Polyolen bei sehr geringen Katalysatorkonzentrationen (25 ppm oder weniger), so dass eine Abtrennung des Katalysators aus dem fertigen Produkt im Allgemeinen nicht mehr erforderlich ist. Ein typisches Beispiel sind die in EP-A-0 700 949 beschriebenen hochaktiven DMC-Katalysatoren, die neben einer Doppelmetallcyanid-Verbindung (z. B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Es ist auch möglich, die in WO 2011/144523 offenbarten alkalischen DMC-Katalysatoren in Stufe I) einzusetzen.

Zur Herstellung der Doppelmetallcyanid-Verbindungen geeignete cyanidfreie Metallsalze besitzen bevorzugt die allgemeine Formel (I),

$$M(X)_n \qquad (I)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X steht für ein oder mehrere (d. h.verschiedene) Anionen, vorzugsweise ein Anion ausgewählt aus der Gruppe der Halogenide (d. h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Cyanat, Thiocyanat, Isocyanat, Isothiocyanat oder Nitrat ist;

oder geeignete cyanidfreie Metallsalze besitzen die allgemeine Formel (II),

$$Mr(X)_3 \qquad (II)$$

wobei

M ausgewählt ist aus den Metallkationen $Fe^{3+}$, $Al^{3+}$ und $Cr^{3+}$,

X steht für ein oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalate ist und

r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (III),

$$M(X)_S \qquad (III)$$

wobei

M ausgewählt ist aus den Metallkationen $Mo^{4+}$, $V^{4+}$ und $W^{4+}$

X steht für oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (IV),

$$M(X)_t \qquad (IV)$$

wobei

M ausgewählt ist aus den Metallkationen $Mo^{6+}$ und $W^{6+}$

X steht für ein oder mehrere (d. h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Cyanat, Thiocyanat, Isocyanat, Isothiocyanat, Carboxylat oder Nitrat ist.

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel-(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (V)

$$(Y)_a M'(CN)_b(A)_c \qquad (V)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),

A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den erfindungsgemäßen DMC-Katalysatoren enthalten sind, sind Verbindungen der allgemeinen Formel (VI)

$$M_x[M'_{x'}(CN)_y]_z \qquad (VI),$$

worin M wie in Formel (I) bis (IV) und

M' wie in Formel (V) definiert ist, und

x, x', y und z sind ganzzahlig und so gewählt, dass die Elektronenneutralität der Doppelmetallcyanidverbindung gegeben ist.

Vorzugsweise ist

x=3, x'=1, y=6 und z=2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zinkhexacyanoiridat (III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US-A-5,158,922 (siehe insbesondere Spalte 6, Zeilen 9 bis 65), US-A-3,404,109, US-A-3,829,505, US-A-3,941,849, EP-A-0 700 949, EP-A-0 761 708, JP-A-4145123, US-A-5470813, EP-A-0 743 093 und WO-A-97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z. B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly-(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im **ersten Schritt** die wässrigen Lösungen des Metallsalzes (z. B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/ oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d. h. der Herstellung der Suspension) erfolgt unter Einsatz einer Mischdüse, besonders bevorzugt unter Einsatz eines Strahldispergators wie in WO-A-01/39883 beschrieben.

Im **zweiten Schritt** erfolgt die Isolierung des Feststoffs (d. h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z. B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung. Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A-01/80994 beschrieben.

Die Konzentration an in Schritt (I) eingesetztem DMC-Katalysator beträgt 5,0 ppm bis 1000 ppm, bevorzugt 10 ppm bis 900 ppm und besonders bevorzugt 20 ppm bis 800 ppm, bezogen auf die Masse des herzustellenden Additionsproduktes **P-I**. Je nach Anforderungsprofil der der Aminaddition (Schritt (II)) nachgeschalteten Anwendung kann der DMC-Katalysator im Produkt belassen oder (teilweise) abgetrennt werden Die (teilweise) Abtrennung des DMC-Katalysators kann beispielsweise durch Behandlung mit Adsorbentien erfolgen. Verfahren zur Abtrennung von DMC-Katalysatoren sind beispielsweise beschrieben in US-A-4,987,271, DE-A-3132258, EP-A-0 406 440, US-A-5,391,722, US-A-5,099,075, US-A-4,721,818, US-A-4,877,906 und EP-A-0 385 619.

Für Schritt (I) des erfindungsgemäßen Verfahrens geeignete H-funktionelle Starterverbindungen **S-I** weisen ein oder mehrere aktive Wasserstoffatome und eine oder mehrere elektronenarme Doppelbindungen auf. Beispielsweise sind Hydroxyethylacrylat, Hydroxyethylmethacrylat, Hydroxypropylacrylat, Hydroxypropylmethacrylat und 3-(Acryloyloxy)-2-hydroxypropylmethacrylat geeignet. Als H-funktionelle Starterverbindungen für das erfindungsgemäße Verfahren geeignet sind außerdem Ringöffnungsprodukte aus ungesättigten cyclischen Carbonsäureanhydriden wie beispielsweise Maleinsäureanhydrid oder 3,4,5,6-Tetrahydrophthalsäureanhydrid und Mono- bzw. Polyolen oder teilweise mit (Meth-)Acrylsäure veresterte Polyole wie Glycerin, Trimethylolpropan und Pentaerythrit und das Reaktionsprodukt aus Bisphenol-A-diglycidylether und (Meth-)Acrylsäure. Als geeignet herausgestellt haben sich ebenfalls Amide wie Acrylamid, Methacrylamid oder N-Alkylacrylamide bzw. N-Alkylmethacrylamide. Bevorzugt werden Hydroxyethylacrylat, Hydroxyethylmethacrylat, Hydroxypropylacrylat und/oder Hydroxypropylmethacrylat verwendet, ganz besonders bevorzugt Hydroxyethylacrylat und Hydroxypropylacrylat. In Schritt (I) des erfindungsgemäßen Verfahrens können eine oder auch mehrere ein oder mehrere elektronenarme Doppelbindungen enthaltende H-funktionelle Starterverbindungen S-I eingesetzt werden.

Es ist natürlich ebenfalls möglich, als Starter gemeinsam mit den ein oder mehrere elektronenarme Doppelbindungen enthaltenden ein oder mehrere H-funktionellen Starterverbindungen S-I auch Starter ohne solche elektronenarme Doppelbindungen einzusetzen. Die auf Basis solcher Starter entstehenden Polyethermoleküle sind in Schritt (II) des erfindungsgemäßen Verfahrens unreaktiv und werden daher in diesem Schritt nicht mit Aminogruppen funktionalisiert. Das erfindungsgemäße Verfahren wird daher bevorzugt in Abwesenheit von Verbindungen ohne elektronenarme Doppelbindungen durchgeführt. Beispiele für hydroxyfunktionelle Starterverbindungen ohne elektronenarme Doppelbindungen sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, sowie methylolgruppenhaltige Kondensate aus Formaldehyd und Phenol oder Harnstoff. Es können auch hochfunktionelle Starterverbindungen auf Basis von hydrierten Stärkehydrolyseprodukten eingesetzt werden. Ganz generell können auch Alkylenoxidadditionsprodukte der genannten Starterverbindungen ohne elektronenarme Doppelbindungen im erfindungsgemäßen Verfahren gemeinsam mit den ein oder mehrere elektronenarme Doppelbindungen enthaltenden ein oder mehreren H-funktionellen Starterverbindungen verwendet werden.

Beispiele für aminogruppenhaltige H-funktionelle Starterverbindungen ohne elektronenarme Doppelbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte, ferner methylolgruppenhaltige Kondensate aus Formaldehyd und Melamin sowie Mannichbasen. Die DMC-katalysierte Umsetzung von Alkylenoxidverbindungen (die Bezeichnungen "Alkylenoxid" und "Epoxid" werden im Rahmen der vorliegenden Erfindung synonym verwendet) in Schritt (I) wird durch die Gegenwart von Aminogruppen erschwert, daher wird dieser Schritt bevorzugt in Abwesenheit von aminogruppenhaltigen Starterverbindungen durchgeführt.

Für Schritt (I) des erfindungsgemäßen Verfahrens geeignete Epoxide (Alkylenoxide) haben 2 bis 24 Kohlenstoffatome. Bei den Epoxiden mit 2 bis 24 Kohlenstoffatomen handelt es sich bevorzugt um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan und 3-Glycidyloxypropyltriisopropoxysilan.

Als Epoxide für die Herstellung der Polyether(ester)polyole in Schritt A) werden bevorzugt Ethylenoxid und/oder Propylenoxid eingesetzt. Die Epoxide können einzeln, im Gemisch oder blockweise dosiert werden. Zum Erhalt eines hohen Anteiles reaktiver primärer Hydroxyendgruppen hat es sich beispielsweise bewährt, Endblöcke aus einem ethylenoxidreichen Alkylenoxidgemisch oder aus reinem Ethylenoxid aufzubauen.

Weitere mit Alkylenoxiden nach Schritt (I) des erfindungsgemäßen Verfahrens unter DMC-Katalyse co-polymerisierbare Monomere sind bevorzugt Lactone, Lactide, aliphatische und aromatische cyclische Carbonsäureanhydride, cyclische Carbonate und Kohlendioxid. Ihre Verwendung wird beschrieben in US-A-3,538,043, US-A-4,500,704, US-A-5,032,671, US-A-6,646,100, EP-A-0 222 453 und WO-A-2008/013731.

Für **Schritt (II)** des erfindungsgemäßen Verfahrens geeignete Amine sind beispielsweise Ammoniak, aliphatische, cycloaliphatische und/oder araliphatische Monoamine mit einer primären Aminogruppe und ggf. weiteren Heteroatomen wie beispielsweise Methylamin, Ethylamin, 1-Aminopropan, 2-Aminopropan, 1-Aminobutan, 2-Aminobutan, Isobutylamin, 1-Aminohexan, 2-Ethyl-1-Aminohexan, Aminopropyltrimethoxysilan, Dodecylamin, Octadecyl-amin, Cyclohexylamin und Benzylamin; aliphatische, cycloaliphatische und/oder araliphatische Monoamine mit einer primären Aminogruppe und einer sekundären Aminogruppe, wobei die sekundäre Aminogruppe auch Teil eines Ringsystems sein kann, wie beispielsweise N-Methylethylendiamin, N-Methylpropylendiamin, N-(2-Aminoethyl)-piperazin und 3-Amino-1,2,4-triazol; aliphatische, cycloaliphatische und/oder heterocyclische Diamine mit einer primären und einer tertiären Aminogruppe und ggf. einer sekundären Aminogruppe wie beispielsweise N,N-dimethylethylendiamin, N,N-dimethyl-1,3-diaminopropan, N,N-dimethyl-1,8-diaminooctan, N,N-dimethyl-1,4-diaminocyclohexan und aliphatische Diamine mit zwei primären und mindestens einer sekundären Aminogruppe, wie z. B. Diethylentriamin, Triethylentetramin, Tetraethylenpentamin und Bis-(3-aminopropyl)-amin. Des Weiteren sind Amine, welche neben der primären Aminogruppe auch Hydroxygruppen enthalten, wie beispielsweise Ethanolamin oder Isopropanolamin, für das erfindungsgemäße Verfahren geeignet.

Ebenfalls geeignet sind (cyclo)aliphatische Diamine. Hierbei handelt es sich um Verbindungen mit zwei primären Aminogruppen mit der allgemeinen Formel $NH_2$-R-$NH_2$, in der R für einen aliphatischen, cycloaliphatischen oder aromatischen Rest, bevorzugt für einen aliphatischen oder cycloaliphatischen Rest mit 2 bis 21, vorzugsweise 2 bis 15 und besonders bevorzugt 2 bis 10 Kohlenstoffatomen steht. Beispielhaft zu nennen sind Ethylendiamin, 1,2- und 1,3-Propylendiamin, 1,4-Diamino-butan, 1,6-Diaminohexan, 2,2,4-und 2,4,4-Trimethyl-1,6-diaminohexan, 1,4-Diaminocyclohexan, 1,5-Diamino-2-methylpentan, 5-Amino-1-aminomethyl-1,3,3-trimethylcyclohexan (Isophorondiamin), Bis-(4-aminocyclohexyl)-methan, Bis-(4-amino-3-methylcyclohexyl)-methan, 1-Amino-1-methyl-3(4)-aminomethylcyclohexan, Bis-(4-Amino-3,5-diethylcyclohexyl)-methan, Bis-aminomethyl-hexahydro-4,7-methano-indan, 2,3-, 2,4- und 2,6-Diamino-1-methylcyclohexan bzw. Gemische dieser Diamine.

Die genannten Mono- und Oligoamine können natürlich auch als Mischung eingesetzt werden. Ist im Folgenden von einem zu addierenden Amin die Rede, so sind damit grundsätzlich auch Gemische zu addierender Amine gemeint, sofern nicht ausdrücklich spezifiziert. Besonders bevorzugt werden in Schritt II 1-Aminopropan, 2-Aminopropan, 1-Aminobutan 1-Aminohexan, 2-Ethyl-1-Aminohexan, Dodecylamin, Octadecyl-amin, Cyclohexylamin, Benzylamin, Aminopropyltrimethoxysilan, N,N-dimethylethylendiamin, N,N-dimethyl-1,3-diaminopropan, N,N-dimethyl-1,8-diaminooctan, N,N-dimethyl-1,4-diaminocyclohexan, Ethanolamin, Isopropanolamin, Ethylendiamin, 1,2- und 1,3-Propylendiamin, 1,4-Diamino-butan, 1,6-Diaminohexan, 2,2,4- und 2,4,4-Trimethyl-1,6-diaminohexan, 1,5-Diamino-2-methylpentan, Bis-(4-amino-3-methylcyclohexyl)-methan und Bis-(4-aminocyclohexyl)-methan eingesetzt.

Das molare Verhältnis von primären Aminogruppen zu additionsfähigen Doppelbindungen beträgt vorzugsweise 0,010 : 1 bis 1,1 : 1, bevorzugt 0,10 : 1 bis 1,1 : 1, besonders bevorzugt 0,50 : 1 bis 1,1 : 1 und ganz besonders bevorzugt 1,0 : 1 bis 1,1 : 1. Die Reaktion kann katalysiert oder unkatalysiert durchgeführt werden. Geeignete Katalysatoren sind beispielsweise Kupferacetat, Zinnchlorid oder Essigsäure. Bevorzugt erfolgt die Addition der Amine ohne Katalysatorzusatz. Ein für diesen Schritt geeigneter Reaktionstemperaturbereich ist beispielsweise der von 0,0 °C bis 150 °C, bevorzugt von 10 °C bis 100 °C und besonders bevorzugt 20 °C bis 80 °C.

Im Folgenden werden mehrere Varianten zur Durchführung von Schritt (I) des erfindungsgemäßen Verfahrens detailliert beschrieben. Die Darstellung ist lediglich beispielhaft und nicht als die vorliegende Erfindung beschränkend zu verstehen.

Variante A) von Schritt (I)

In Variante A) von Schritt (I) des erfindungsgemäßen Verfahrens wird die ein oder mehrere elektronenarme Doppelbindungen enthaltende H-funktionelle Starterverbindung S-I mit dem DMC-Katalysator in einem Reaktor / Reaktorsystem zunächst vorgelegt. Der ein oder mehrere elektronenarme Doppelbindungen enthaltenden H-funktionellen Verbindung S-I können ggf. vor Inkontaktbringen mit dem DMC-Katalysator geringe Mengen einer anorganischen Mineralsäure, bevorzugt Phosphorsäure, zugesetzt werden, wie in den Anmeldeschriften WO-A-99/14258 und EP-A-1 577 334 beschrieben, um etwaige Basenspuren in der ein oder mehrere elektronenarme Doppelbindungen enthaltenden H-funktionellen Starterverbindung S-I zu neutralisieren, bzw. um den Produktionsprozess generell stabiler zu gestalten. Ebenfalls können vor Reaktionsbeginn oder während der Reaktion Polymerisationsinhibitoren wie beispielsweise sterisch gehinderte Phenole oder Thiazine wie Phenothiazin in Mengen von 10 ppm bis 2000 ppm, bevorzugt in Mengen von 50 ppm bis 1000 ppm, besonders bevorzugt in Mengen von 100 ppm bis 800 ppm, bezogen auf die Gesamtmasse aller Reaktionspartner und ggf. Lösungsmittel, zugesetzt werden. Nach Aufheizen auf Temperaturen von 50 °C bis 160 °C, bevorzugt 60 °C bis 140 °C, ganz besonders bevorzugt 70 °C bis 140 °C wird der Reaktorinhalt in einer bevorzugten Verfahrensvariante mit Inertgas über einen Zeitraum von bevorzugt 10 bis 60 min. unter Rühren gestrippt. Beim Strippen mit Inertgas werden flüchtige Bestandteile, wie beispielsweise Wasserspuren, unter Einleiten von Inertgasen in die Flüssigphase bei gleichzeitig angelegtem Vakuum, bei einem absoluten Druck von 5 mbar bis 500 mbar, entfernt. Nach Eindosieren von typischerweise 5 Gew.-% bis 20 Gew.-% eines oder mehrerer Epoxide, bezogen auf die Menge an vorgelegter ein oder mehrere elektronenarme Doppelbindungen enthaltender H-funktioneller Verbindung S-I, wird der DMC-Katalysator aktiviert. Die Zugabe eines oder mehrerer Epoxide kann vor, während oder nach dem Aufheizen des Reaktorinhaltes auf Temperaturen von 50 °C bis 160 °C, bevorzugt 60 °C bis 140 °C, ganz besonders bevorzugt 70 °C bis 140 °C geschehen; sie erfolgt bevorzugt nach dem Strippen. Die Aktivierung des Katalysators macht sich durch einen beschleunigten Abfall des Reaktordruckes bemerkbar, wodurch der beginnende Epoxidumsatz angezeigt wird. Dem Reaktionsgemisch kann sodann die gewünschte Menge Epoxid bzw. Epoxidgemisch, kontinuierlich zugeführt werden, wobei eine Reaktionstemperatur von 20 °C bis 200 °C, bevorzugt von 50 °C bis 160 °C, besonders bevorzugt 70 °C bis 130 °C, ganz besonders bevorzugt 70 °C bis 100 °C gewählt wird. Die Reaktionstemperatur ist in den vielen Fällen identisch mit der Aktivierungstemperatur, sie kann nach erfolgter Katalysatoraktivierung aber auch geändert werden, beispielsweise um empfindliche Starterverbindungen thermisch nicht zu stark zu belasten. Oft erfolgt die Katalysatoraktivierung bereits so schnell, dass die Dosierung einer separaten Menge Epoxid zur Katalysatoraktivierung entfallen kann und direkt, gegebenenfalls zunächst mit einer reduzierten Dosierrate, mit der kontinuierlichen Dosierung eines oder mehrerer Epoxide begonnen werden kann. Auch kann die Reaktionstemperatur während der gesamten Epoxiddosierphase innerhalb der beschriebenen Grenzen variiert werden. Ebenfalls können die Epoxide dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei DMC-katalysierten Prozessen ist die Dosierung in die Flüssigphase häufig die bevorzugte Variante. Das eine oder mehrere Epoxid(e) sollten dem Reaktor kontinuierlich derart zugeführt werden, dass die sicherheitstechnischen Druckgrenzen des verwendeten Reaktorsystems nicht überschritten werden. Insbesondere bei der Codosierung von ethylenoxidhaltigen Epoxidgemischen oder reinem Ethylenoxid ist darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Bei Dosierung in die Flüssigphase sollten die Dosieraggregate selbstleerend ausgelegt sein, beispielsweise durch Anbringen der Dosierbohrungen an der Unterseite des Verteilerrings. Generell sollte durch apparative Maßnahmen, beispielsweise durch die Montage von Rückschlagklappen, ein Rückströmen von Reaktionsmedium in die Dosieraggregate und Eduktvorlagen verhindert werden. Wird ein Epoxidgemisch dosiert, können die jeweiligen Epoxide dem Reaktor separat oder als Mischung zugeführt werden. Eine Vorvermischung der Alkylenoxide untereinander kann beispielsweise durch ein in der gemeinsamen Dosierstrecke befindliches Mischaggregat erreicht werden ("inline-blending"). Es hat sich auch bewährt, die Epoxide pumpendruckseitig in einen beispielsweise über einen oder mehrere Wärmetauscher geführten Umpumpkreislauf einzeln oder vorgemischt zu dosieren. Für die gute Durchmischung mit dem Reaktionsmedium ist es dann von Vorteil ein hochscherendes Mischaggregat in den Alkylenoxid- / Reaktionsmediumstrom zu integrieren. Die Temperatur der exothermen ringöffnenden Additionsreaktion wird durch Kühlung auf dem gewünschten Niveau gehalten. Gemäß dem Stand der Technik zur Auslegung von Polymerisationsreaktoren für exotherme Reaktionen (z. B. Ullmann's Encyclopedia of Industrial Chemistry, Vol. B4, pp 167ff, 5th Ed., 1992) erfolgt eine solche Kühlung im Allgemeinen über die Reaktorwand (z. B. Doppelmantel, Halbrohrschlange) sowie mittels weiterer intern im Reaktor und/oder extern im Umpumpkreislauf angeordneter Wärmetauscherflächen, z. B. an Kühlschlangen, Kühlkerzen, Platten- Rohrbündel- oder Mischerwärmetauschern. Diese sollten so ausgelegt sein, dass auch zu Beginn der Dosierphase, d. h. bei kleinem Füllstand, effektiv gekühlt werden kann.

Generell sollte in allen Reaktionsphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen, wie beispielsweise Gitterrührer, geeignet sind (siehe z. B. Handbuch Apparate; Vulkan-Verlag Essen, 1. Aufl. (1990), S. 188 - 208). Technisch besonders relevant ist hierbei eine im Mittel über den gesamten Reaktorinhalt eingetragene spezifische Mischleistung, die im Allgemeinen im Bereich von 0,2 W/l bis 5 W/l, bezogen auf das Reaktorvolumen, liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Bevorzugt werden Rührorgane mit bodengängigen Rührstufen eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 mbar bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich mittels eines über einen Wärmetauscher geführten Umpumpkreislaufs zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor eingetragene spezifische Mischenergie beläuft sich ebenfalls auf Werte von im Mittel 0,2 bis 5 W/l, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1,0 : 1 bis 10 : 1 besitzen. Als Reaktorböden kommen beispielsweise Kugel-, Klöpper-, Flach,- oder Konusböden in Frage.

Nach Ende der Dosierung des einen oder mehrerer Epoxide in Schritt (I) des erfindungsgemäßen Verfahrens kann sich eine Nachreaktionsphase anschließen, in der restliches Alkylenoxid abreagiert. Das Ende dieser Nachreaktionsphase ist erreicht, wenn kein weiterer Druckabfall im Reaktionskessel feststellbar ist. Spuren unreagierter Epoxide können nach der Reaktionsphase gegebenenfalls im Vakuum bei einem absoluten Druck von 1 mbar bis 500 mbar oder durch Strippen quantitativ entfernt werden. Durch Strippen werden flüchtige Bestandteile, wie beispielsweise (Rest-) Epoxide, unter Einleiten von Inertgasen oder Wasserdampf in die Flüssigphase bei gleichzeitig angelegtem Vakuum (beispielsweise durch Durchleiten von Inertgas bei einem Absolutdruck von 5 mbar bis 500 mbar) entfernt. Das Entfernen flüchtiger Bestandteile, wie beispielsweise nicht umgesetzter Alkylenoxide, entweder im Vakuum oder durch Strippen, erfolgt bei Temperaturen von 20 °C bis 200 °C, bevorzugt bei 50 °C bis 160 °C und vorzugsweise unter Rühren. Solche Strippvorgänge können auch in sog. Strippkolonnen durchgeführt werden, in denen dem Produktstrom ein Inertgas- oder Wasserdampfstrom entgegengeleitet wird. Bevorzugt wird das Strippen mit Inertgasen in Abwesenheit von Wasserdampf durchgeführt.

Nach Erreichen von Druckkonstanz bzw. nach Entfernen flüchtiger Bestandteile durch Vakuum und/oder Strippen kann das nach Schritt I des erfindungsgemäßen Verfahrens erhaltene Zwischenprodukt aus dem Reaktor abgelassen werden.

Ein Charakteristikum von DMC-Katalysatoren ist ihre ausgeprägte Empfindlichkeit gegen hohe Konzentrationen an Hydroxylgruppen, welche in gängigen großtechnischen Verfahren zur Polyetherpolyolherstellung beispielsweise durch zu Reaktionsbeginn im Reaktionsgemisch vorliegende hohe Anteile an Startern wie Ethylenglykol, Propylenglykol, Glycerin, Trimethylolpropan, Sorbitol oder Saccharose hervorgerufen werden, und polare Verunreinigungen des Reaktionsgemisches bzw. des Starters oder der Starter. Die DMC-Katalysatoren können dann während der Reaktionsinitüerungsphase nicht in die polymerisationsaktive Form überführt werden. Verunreinigungen können beispielsweise Wasser, Verbindungen mit einer hohen Zahl in enger Nachbarschaft stehender Hydroxylgruppen wie Kohlenhydrate und Kohlenhydratderivate oder Verbindungen mit basischen Gruppen wie beispielsweise Amine sein. Für Schritt I des erfindungsgemäßen Verfahrens ist von besonderer Bedeutung, dass auch Substanzen mit in enger Nachbarschaft stehenden Carbonylgruppen bzw. zu Hydroxylgruppen benachbarten Carbonylgruppen sich nachteilig auf die Katalysatoraktivität auswirken. Um Starter mit hohen Konzentrationen an OH-Gruppen, bzw. Starter mit als Katalysatorgiften anzusehenden Verunreinigungen oder Starter mit die Katalysatoraktivität unvorteilhaft beeinflussenden Konstellationen funktioneller Gruppen dennoch DMC-katalysierten Alkylenoxidadditionsreaktionen unterziehen zu können, müssen die Hydroxylgruppenkonzentration gesenkt, die Starterkonzentration reduziert, bzw. die Katalysatorgifte unschädlich gemacht werden. Hierzu können beispielsweise aus diesen Starterverbindungen mittels basischer Katalyse zunächst Vorpolymerisate hergestellt werden, welche dann nach Aufarbeitung mittels DMC-Katalyse in die erwünschten Alkylenoxidadditionsprodukte hoher Molmasse überführt werden. Nachteilig bei dieser Vorgehensweise ist, dass solche oft mittels basischer Katalyse erhaltenen Vorpolymerisate sehr sorgfältig aufgearbeitet werden müssen, um die Deaktivierung des DMC-Katalysators durch über die Vorpolymerisate eingeschleppte basische Katalysatorspuren auszuschließen. Viele der für das erfindungsgemäße Verfahren infrage kommenden Starterverbindungen mit ein oder mehreren elektronenarmen Doppelbindungen erweisen sich zudem unter basischen Reaktionsbedingungen als instabil.

Diese Nachteile können durch das Verfahren der kontinuierlichen Starterzudosierung, welches in WO-A-97/29146 offenbart ist, überwunden werden. Hierbei werden kritische Starterverbindungen im Reaktor nicht vorgelegt, sondern neben den Alkylenoxiden dem Reaktor während der Reaktion kontinuierlich zugeführt. Als Startmedium, bzw. als sogenannte Starterpolyole für die Reaktion können in diesem Verfahren Alkylenoxidadditionsprodukte H-funktioneller Starterverbindungen, beispielsweise solcher ohne elektronenarme Doppelbindungen, vorgelegt werden. Es ist auch die Verwendung kleiner Mengen des nach Schritt (I) herzustellenden Additionsproduktes P-I selbst, das vorher separat hergestellt wurde, als Startmedium möglich. Die Notwendigkeit, für weitere Alkylenoxidadditionen geeignete Vorpolymerisate zunächst separat herstellen zu müssen, entfällt somit.

In Variante B) von Schritt (I) des erfindungsgemäßen Verfahrens werden daher ein Starterpolyol **S-Ia** und der DMC-Katalysator im Reaktorsystem vorgelegt, und die ein oder mehrere H-funktionellen Starterverbindungen enthaltend ein oder mehrere elektronenarme Doppelbindungen **S-I** werden kontinuierlich gemeinsam mit einem oder mehreren Epoxiden zugeführt. Als Starterpolyol **S-Ia** für diese Variante von Schritt (I) sind Alkylenoxidadditionsprodukte wie beispielsweise Polyetherpolyole, Polycarbonatpolyole, Polyestercarbonatpolyole oder Polyethercarbonatpolyole, jeweils beispielsweise mit OH-Zahlen im Bereich von 3,0 mg KOH/g bis 1000 mg KOH/g, vorzugsweise von 3,0 mg KOH/g bis 300 mg KOH/g, und / oder gemäß Schritt (I) separat hergestelltes Additionsprodukt **P-I**, geeignet. Vorzugsweise wird gemäß Schritt (I) separat hergestelltes Additionsprodukt **P-I** als Starterpolyol **S-Ia** in Schritt I) eingesetzt. Auch bei Durchführung von Schritt I des erfindungsgemäßen Verfahrens nach Variante B) können vor Reaktionsbeginn oder während der Reaktion Polymerisationsinhibitoren wie beispielsweise sterisch gehinderte Phenole oder Thiazine wie Phenothiazin in Mengen von 10 bis 2000 ppm, bevorzugt in Mengen von 50 bis 1000 ppm, besonders bevorzugt in Mengen von 100 bis 800 ppm, bezogen auf die Ansatzmasse, zugesetzt werden.

Vorzugsweise wird die Dosierung der ein oder mehrere elektronenarme Doppelbindungen enthaltenden H-funktionellen Verbindung(en) **S-I** und die eines oder mehrerer Epoxides / Epoxide gleichzeitig beendet, oder die ein oder mehrere elektronenarme Doppelbindungen enthaltenden H-funktionellen Verbindung(en) **S-I** und eine erste Teilmenge an einem oder mehreren Epoxid(en) werden zunächst gemeinsam zudosiert und anschließend die zweite Teilmenge an einem oder mehreren Epoxiden, wobei die Summe der ersten und zweiten Teilmenge an einem oder mehreren Epoxiden der Gesamtmenge der an in Schritt (I) eingesetzten ein oder mehreren Epoxiden entspricht. Die erste Teilmenge beträgt vorzugsweise 60 Gew.-% bis 98 Gew. -% und die zweite Teilmenge beträgt 40 Gew.-% bis 2 Gew.-% der insgesamt in Schritt (I) zu dosierenden Menge eines oder mehrerer Epoxide. Wird die Zusammensetzung des Epoxiddosierstroms nach Ende der Dosierung der ein oder mehrere elektronenarme Doppelbindungen enthaltenden H-funktionellen Verbindung(en) **S-I** geändert, lassen sich auch nach Verfahrensvariante B) Produkte mit Multiblockstrukturen herstellen. Nach Zudosierung der Reagenzien kann sich eine Nachreaktionsphase anschließen, in der der Verbrauch an Alkylenoxid durch Überwachung des Drucks quantifiziert werden kann. Nach Erreichen von Druckkonstanz kann das Zwischenprodukt, gegebenenfalls nach Anlegen von Vakuum oder durch Strippen zur Entfernung von nicht umgesetzen Alkylenoxiden, wie oben beschrieben, abgelassen werden.

Es ist natürlich auch in Variante B von Schritt (I) des erfindungsgemäßen Verfahrens möglich als kontinuierlich parallel mit einem oder mehreren Epoxiden zuzudosierenden Starterverbindungen gemeinsam mit den ein oder mehrere elektronenarme Doppelbindungen enthaltenden ein oder mehreren H-funktionellen Starterverbindungen **S-I** auch H-funktionelle Starter ohne solche elektronenarme Doppelbindungen einzusetzen. Die auf Basis solcher Starter entstehenden Polyethermoleküle sind in Schritt (II) des erfindungsgemäßen Verfahrens unreaktiv und werden daher in diesem Schritt nicht mit Aminogruppen funktionalisiert. Variante B) von Schritt (I) des erfindungsgemäßen Verfahrens wird daher bevorzugt in Abwesenheit von Verbindungen ohne elektronenarme Doppelbindungen durchgeführt.

In Variante C) von Schritt (I) des erfindungsgemäßen Verfahrens werden die Additionsprodukte **P-I** vollkontinuierlich hergestellt. Ein vollkontinuierliches Verfahren zur Herstellung von Epoxid-Additionsprodukten ist in W O-A-98/03571 grundsätzlich beschrieben. Die dort offenbarte Verfahrensweise ist für die Durchführung des erfindungsgemäßen Schrittes (I) anwendbar. In dieser Variante werden neben einem oder mehreren Epoxiden und einer oder mehreren ein oder mehrere elektronenarme Doppelbindungen enthaltenden H-funktionellen Starterverbindungen **S-I** auch der DMC-Katalysator dem Reaktor bzw. einem Reaktorsystem unter Alkoxylierungsbedingungen kontinuierlich zugeführt und das Additionsprodukt **P-I** kontinuierlich dem Reaktor bzw. dem Reaktorsystem nach einer vorwählbaren mittleren Verweilzeit entnommen. Zum Anfahren eines solchen vollkontinuierlichen Prozesses wird ein Starterpolyol **S-Ia** und eine Teilmenge des DMC-Katalysators vorgelegt. Als Starterpolyol ]S-Ia für Variante C) von Schritt (I) des erfindungsgemäßen Verfahrens sind Alkylenoxidadditionsprodukte wie beispielsweise Polyetherpolyole, Polycarbonatpolyole, Polyestercarbonatpolyole, Polyethercarbonatpolyole beispielsweise mit OH-Zahlen im Bereich von 3,0 mg KOH/g bis 1000 mg KOH/g, vorzugsweise von 3,0 mg KOH/g bis 300 mg KOH/g, und/oder nach Schritt (I) des erfindungsgemäßen Verfahrens hergestelltes Additionsprodukt **P-I,** das vorher separat hergestellt wurde, geeignet. Vorzugsweise wird nach Schritt (I) des erfindungsgemäßen Verfahrens hergestelltes Additionsprodukt **P-I,** das vorher separat hergestellt wurde, als Starterpolyol in Variante C von Schritt (I) des erfindungsgemäßen Verfahrens eingesetzt. Bei Durchführung von Schritt (I) des erfindungsgemäßen Verfahrens nach Variante C) können Polymerisationsinhibitoren wie beispielsweise sterisch gehinderte Phenole oder Thiazine wie Phenothiazin in Konzentrationen von 10 ppm bis 2000 ppm, bevorzugt in Konzentrationen von 50 ppm bis 1000 ppm, besonders bevorzugt in Konzentrationen von 100 ppm bis 800 ppm, dem Reaktor mit dem Eduktstrom zugeführt werden. Es können sich kontinuierliche Nachreaktionsschritte, beispielsweise in einer Reaktorkaskade oder in einem Rohrreaktor anschließen. Flüchtige Bestandteile können im Vakuum und/ oder durch Strippen, wie oben beschrieben, entfernt werden

Die berechneten OH-Zahlen der nach dem DMC-katalysierten Schritt (I) erhaltenen Additionsprodukte P-I weisen bevorzugt Werte von 3,0 mg KOH/g bis 300 mg KOH/g, besonders bevorzugt von 6,0 mg KOH/g bis 250 mg KOH/g, ganz besonders bevorzugt von 10 mg KOH/g bis 200 mg KOH/g, auf. Dies gilt unabhängig von der eingesetzten Variante (A, B oder C).

Unter Äquivalentmolmasse ist die durch die Zahl der aktiven Wasserstoffatome geteilte Gesamtmasse des aktive Wasserstoffatome enthaltenden Materials zu verstehen. Im Falle von hydroxygruppenhaltigen Materialien steht sie in folgender Beziehung zur OH-Zahl:

$$\text{Äquivalentmolmasse} = 56100 \,/\, \text{OH-Zahl [mg KOH/g]}$$

Den nach Schritt (I) des erfindungsgemäßen Verfahrens erhältlichen Additionsprodukten **P-I** können gegebenenfalls Alterungsschutzmittel wie z. B. Antioxidantien zugesetzt werden.

Im Folgenden wird **Schritt (II)** des erfindungsgemäßen Verfahrens detailliert beschrieben. Auch diese Darstellung ist lediglich beispielhaft und nicht als die vorliegende Erfindung beschränkend zu verstehen:

Für Schritt (II) wird ein geeignetes Amin bei Temperaturen von 0 °C bis 150 °C, bevorzugt 10 °C bis 100 °C und besonders bevorzugt 20 °C bis 80 °C mit dem Additionsprodukt **P-I** aus Schritt (I) zur Reaktion gebracht. Das molare Verhältnis von primären Aminogruppen zu additionsfähigen Doppelbindungen beträgt vorzugsweise 0,010 : 1 bis 1,1 : 1, bevorzugt 0,10 : 1 bis 1,1 : 1, besonders bevorzugt 0,50 : 1 bis 1,1 : 1 und ganz besonders bevorzugt 1,0 : 1 bis 1,1 : 1. Zwar kann die Reaktion mit Kupferacetat, Zinnchlorid oder Essigsäure katalysiert werden, sie wird jedoch bevorzugt ohne Katalysatorzusatz durchgeführt.

Im Allgemeinen werden die Amine unter Inertgas dem vorgelegten Additionsprodukt **P-I** aus Schritt (I) zugeführt und bei den genannten Temperaturen über einen Zeitraum von 1 h bis ca. 48 h gerührt. Eine Vorvermischung der Amine mit dem Additionsprodukt **P-I** aus Schritt (I) ist ebenfalls möglich, beipielsweise über ein in der gemeinsamen Dosierstrecke befindliches Mischaggregat ("inline-blending").

Der Reaktionsfortschritt kann über gängige Methoden, wie beispielsweise online oder offline durchgeführte gaschromatographische Untersuchungen oder spektroskopische Methoden, wie beispielsweise NMR- oder IR-Spektroskopie quantifiziert werden. Spuren unreagierter Amine oder etwaige Aminüberschüsse können nach der Reaktionsphase gegebenenfalls im Vakuum bei einem absoluten Druck von 1 bis 500 mbar oder durch Strippen quantitativ entfernt werden.

Die Umsetzung des Additionsprodukt **P-I** aus Schritt (I) mit dem oder den Aminen in Schritt (II) kann prinzipiell im gleichen Reaktor wie die Herstellung des Vorproduktes nach Schritt (I) erfolgen. Es ist jedoch bevorzugt, die Umsetzung nach Schritt (II) in einem anderen Reaktor durchzuführen, da im Reaktor verbleibende Aminspuren die Durchführung des nächsten DMC-katalysierten Schrittes (I) behindern können.

Die vorliegende Erfindung betrifft ferner ein ω-Hydroxy-Aminopolymer, das nach dem erfindungsgemäßen Verfahren erhältlich ist, wobei das ω-Hydroxy-Aminopolymer bevorzugt keiner Reinigung unterzogen, sondern stattdessen unmittelbar der angestrebten Anwendung zugeführt wird.

Die vorliegende Erfindung ist auch auf die Verwendung eines erfindungsgemäßen ω-Hydroxy-Aminopolymers zur Herstellung eines Polyurethanharnstoffpolymers gerichtet.

Die vorliegende Erfindung ist zudem auf ein Polyurethanharnstoffpolymer gerichtet, welches durch Umsetzung eines Polyisocyanats mit einem ω-Hydroxy-Aminopolymer nach dem erfindungsgemäßen Verfahren erhältlich ist. Hierzu können die nach dem erfindungsgemäßen Verfahren erhältlichen ω-Hydroxy-Aminopolymere alleine oder gegebenenfalls im Gemisch mit weiteren isocyanatreaktiven Komponenten mit organischen Polyisocyanaten, gegebenenfalls in Gegenwart von Treibmitteln, Katalysatoren und gegebenenfalls weiteren Zusatzstoffen wie z. B. Zellstabilisatoren zur Reaktion gebracht werden und so als Komponenten von massiven oder geschäumten Polyurethanharnstoffen dienen. Folglich sind Polyurethanharnstoffe, bevorzugt massive oder geschäumte Polyurethanharnstoffe, insbesondere Beschichtungssysteme erhalten auf Basis der erfindungsgemäßen ω-Hydroxy-Aminopolymere ebenfalls Gegenstand der Erfindung. Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136 beschrieben werden, beispielsweise solche der Formel (IX),

$$Q(NCO)_n, \qquad (IX)$$

in der

n = 2 - 4, vorzugsweise 2 -3,

und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP 0 007 502 Al, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Die urethangruppenhaltigen Polyisocyanate (Präpolymere) können beispielsweise Reaktionsprodukte der Polyisocyanate mit Polyester-Polyolen oder aber beliebigen anderen Polyolen (beispielsweise konventionellen Polyetherpolyolen) sein. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'-Diphenylmethandiisocyanat und 2,4'-Diphenylmethandiisocyanat und Polyphenylpolymethylenpolyisocyanat eingesetzt.

Neben den vorgenannten Polyisocyanaten können für die Herstellung der Polyurethan(harnstoff)polymere zusätzlich noch konventionelle Polyetherpolyole verwendet werden. Unter konventionellen Polyetherpolyolen im Sinne der Erfindung sind Verbindungen zu verstehen, die Alkylenoxidadditionsprodukte von Starterverbindungen mit Zerewitinoff-aktiven Wasserstoffatomen, sind. Beispiele für solche Polyetherpolyole sind dem Fachmann bekannt. Sie können eine Hydroxylzahl gemäß DIN 53240 von ≥ 3,0 mg KOH/g bis ≤ 1000 mg KOH/g, vorzugsweise von ≥ 5,0 mg KOH/g bis ≤00 mg KOH/g aufweisen. Die für die Herstellung der konventionellen Polyetherpolyole eingesetzten Starterverbindungen mit Zerewitinoff-aktiven Wasserstoffatomen weisen meist Funktionalitäten von 2 bis 8 auf. Die Starterverbindungen können hydroxyfunktionell und / oder aminofunktionell sein. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Beispiele für aminofunktionelle Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans und bei der Kondensation von Anilin mit Formaldehyd zu Diaminodiphenylmethan anfallende höherkernige Produkte.

Geeignete Alkylenoxide für die konventionellen Polyetherpolyole sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Die Herstellung der konventionellen Polyetherpolyole kann basenkatalysiert, beispielsweise über Alkalimetallhydroxid- oder Aminkatalyse, doppelmetallcyanidkatalysiert oder Lewis- bzw. Brrønsted-säurekatalysiert erfolgen.

Neben den vorgenannten konventionellen Polyetherpolyolen können für die Herstellung der Polyurethan(harnstoff)polymere zusätzlich oder alternativ auch Polyesterpolyole verwendet werden. Geeignete Polyesterpolyole weisen vorzugsweise OH-Zahlen im Bereich von 6 bis 800 mg KOH/g auf und können beispielsweise aus mehrfunktionellen Carbonsäuren, vorzugsweise organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden. Anstelle der mehrfunktionellen Carbonsäuren können auch deren Derivate, wie z. B. Säurechloride oder -anhydride eingesetzt werden.

## Beispiele

Messmethoden:

### OH-Zahl und Viskosität

Experimentell ermittelte OH-Zahlen wurden gemäß der Vorschrift der DIN 53240 bestimmt. Für die weiteren Umsetzungen gemäß Schritt (II) des erfindungsgemäßen Verfahrens wurden die aus den Ansätzen von Schritt (I) jeweils berechenbaren theoretischen OH-Zahlen zugrundegelegt.
Die Aminzahlen wurden gemäß der Vorschrift der DIN 53176 ermittelt.
Die Viskositäten wurden mittels Rotationsviskosimeter (Physica MCR 51, Hersteller: Anton Paar) nach der Vorschrift der DIN 53018 ermittelt.

### Molmassenverteilung

Die Molmassenverteilung wurde mittels Größenausschlusschromatographie (SEC) ermittelt. Verwendet wurde das Gerät Agilent 1100 Series der Fa. Agilent. Angegeben wird die Polydispersität PD für die Molekulargewichtsverteilung $M_w/M_n$, wobei $M_w$ für die gewichtsgemittelte Molmasse und $M_n$ für die zahlengemittelte Molmasse stehen. Weitere Angaben:

- Säulenkombination: 1 Vorsäule PSS, 5 $\mu$l, 8x50mm; 2 PSS SVD, 5 $\mu$l, 100 A°, 8x300mm; 2 PSS SVD, 5 $\mu$l, 1000 A°, 8x300mm, PSS ist der Hersteller der Säulen (Polymer Standard Solutions, Mainz)

- Auswertesoftware: WIN GPC der Fa. PSS

- Lösungsmittel: THF (Merck LiChrosolv)

- Flussrate: 1 ml / min

- Detektortyp: RI-Detektor (Brechungsindex), Shodex RI 74

- Verwendete Kalibrationsstandards: Kalibrierstandard der Fa. PSS auf Basis Polystyrol.

## Eingesetzte Rohstoffe

### Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in WO-A-01/80994, Beispiel 6.

### IRGANOX® 1076:

Octadecyl-3-(3,5-di-tert.butyl-4-hydroxyphenyl)propionat (Ciba Specialty Chemicals (jetzt BASF)).

### Polyol 1:

Polyether mit einer OH-Zahl von 190 mg KOH / g, hergestellt unter KOH-Katalyse durch Addition eines Propylenoxid-Blocks (28 Gew.-%, bezogen auf die Gesamtmenge der dosierten Alkylenoxide), gefolgt von einem Ethylenoxid-Block (72 Gew.-%, bezogen auf die Gesamtmenge der dosierten Alkylenoxide) an 2-Ethyl-1-hexanol, Aufarbeitung durch Neutralisation des Katalysators mit Schwefelsäure und Abtrennung der entstandenen Salze durch Filtration.

### Polyol 2:

Polyether mit einer OH-Zahl von 120,4 mg KOH / g, hergestellt unter DMC-Katalyse (30 ppm Katalysatorgehalt) durch Addition eines Gemisches aus 70 Gewichtsteilen Ethylenoxid und 30 Gewichtsteilen Propylenoxid an Propylenglykol nach dem Verfahren der kontinuierlichen Starterzudosierung. Der Katalysator verblieb im Produkt.

**Beispiel 1a) (Schritt I des erfindungsgemäßen Verfahrens)**

Unter Stickstoffatmosphäre wurden in einen 2 l Laborautoklaven 119,9 g Polyol 1, 0,068 g DMC-Katalysator und 0,309 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Es wurden sodann beginnend bei 130 °C und Rühren mit 800 U/min. zunächst 75 g Propylenoxid mit 210 g / h eindosiert, wobei direkt nach Dosierbeginn bereits ein aktiver DMC-Katalysator beobachtet wurde. Innerhalb der Dosierung der ersten 50 g Propylenoxid wurde die Reaktionstemperatur von 130 °C auf 90 °C gesenkt. Nach Dosierung von 75 g Propylenoxid wurde die Dosierung von 229,7 g 2-Hydroxyethylacrylat gestartet. Die Dosierungen der restlichen Propylenoxidmenge (755,6 g) und des 2-Hydroxyethylacrylats wurden so gestaltet, dass nach Ende der Dosierung des 2-Hydroxyethylacrylats noch 180 g Propylenoxid zu dosieren waren. Die Gesamtdosierzeit für das Propylenoxid betrug 4,03 h, gefolgt von einer Nachreaktionszeit von 0,5 h. Nach Ende der Nachreaktion wurde der Reaktorinhalt auf 100 °C aufgeheizt und bei dieser Temperatur 30 min. bei einem Druck (absolut) von 10 mbar ausgeheizt. Sodann wurde auf 80 °C abgekühlt und es wurden 0,635 g IRGANOX 1076® zugegeben. Die per Gelpermeationschromatographie (Polystyrolstandards) bestimmte zahlenmittlere Molmasse beträgt 725 Da, $M_w/M_n$ = 1,19. Die berechnete OH-Zahl betrug 112 mg KOH / g.

**Beisl)iel 1b) (Schritt I des erfindungsgemäßen Verfahrens)**

Unter Stickstoffatmosphäre wurden in einen 2 l Laborautoklaven 120 g des Produktes aus Beispiel 1a), 0,061 g DMC-Katalysator und 0,315 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Es wurden sodann beginnend bei 130 °C und Rühren mit 800 U/min. zunächst 50 g Propylenoxid mit 230 g / h eindosiert, wobei direkt nach Dosierbeginn bereits ein aktiver DMC-Katalysator beobachtet wurde. Innerhalb der Dosierung dieser ersten 50 g Propylenoxid wurde die Reaktionstemperatur von 130 °C auf 90 °C gesenkt und nach Erreichen von 90 °C Reaktorinnentemperatur wurde die Dosierung von 250,3 g 2-Hydroxyethylacrylat gestartet. Die Dosierungen der restlichen Propylenoxidmenge (780,0 g) und des 2-Hydroxyethylacrylats wurden so gestaltet, dass nach Ende der Dosierung des 2-Hydroxyethylacrylats noch 180 g Propylenoxid zu dosieren waren. Die Gesamtdosierzeit für das Propylenoxid betrug 4,03 h, gefolgt von einer Nachreaktionszeit von 0,5 h. Nach Ende der Nachreaktion wurde der Reaktorinhalt auf 100 °C aufgeheizt und bei dieser Temperatur 30 min. bei einem Druck (absolut) von 10 mbar ausgeheizt. Sodann wurde auf 80 °C abgekühlt und es wurden 0,607 g IRGANOX 1076® zugegeben. Die per Gelpermeationschromatographie (Polystyrolstandards) bestimmte zahlenmittlere Molmasse beträgt 693 Da, $M_w/M_n$ = 1,17.

**Beispiel 1c) (Schritt I des erfindungsgemäßen Verfahrens)**

Unter Stickstoffatmosphäre wurden in einen 2 l Laborautoklaven 119,9 g des Produktes aus Beispiel 1b), 0,063 g DMC-Katalysator und 0,316 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Es wurden sodann beginnend bei 130 °C und Rühren mit 800 U/min. zunächst 50 g Propylenoxid mit 230 g / h eindosiert, wobei direkt nach Dosierbeginn bereits ein aktiver DMC-Katalysator beobachtet wurde. Innerhalb der Dosierung dieser ersten 50 g Propylenoxid wurde die Reaktionstemperatur von 130 °C auf 90 °C gesenkt und nach Erreichen von 90 °C Reaktorinnentemperatur wurde die Dosierung von 250,3 g 2-Hydroxyethylacrylat gestartet. Die Dosierungen der restlichen Propylenoxidmenge (780,0 g) und des 2-Hydroxyethylacrylats wurden so gestaltet, dass nach Ende der Dosierung des 2-Hydroxyethylacrylats noch 180 g Propylenoxid zu dosieren waren. Die Gesamtdosierzeit für das Propylenoxid betrug 4,02 h, gefolgt von einer Nachreaktionszeit von 0,5 h. Nach Ende der Nachreaktion wurde der Reaktorinhalt auf 100 °C aufgeheizt und bei dieser Temperatur 30 min. bei einem Druck (absolut) von 10 mbar ausgeheizt. Sodann wurde auf 80 °C abgekühlt und es wurden 0,617 g IRGANOX 1076® zugegeben. Die per Gelpermeationschromatographie (Polystyrolstandards) bestimmte zahlenmittlere Molmasse beträgt 671 Da, $M_w/M_n$ = 1,19. Die berechnete OH-Zahl betrug 112 mg KOH / g.

**Beispiel 1 d) (Schritt I des erfindungsgemäßen Verfahrens)**

Unter Stickstoffatmosphäre wurden in einen 2 l Laborautoklaven 120,3 g des Produktes aus Beispiel 1b), 0,038 g DMC-Katalysator und 0,313 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Es wurden sodann beginnend bei 130 °C und Rühren mit 800 U/min. zunächst 50 g Propylenoxid mit 230 g / h in den Kopfraum (Gasdom) des Reaktors eindosiert, wobei direkt nach Dosierbeginn bereits ein aktiver DMC-Katalysator beobachtet wurde. Innerhalb der Dosierung dieser ersten 50 g Propylenoxid wurde die Reaktionstemperatur von 130 °C auf 90 °C gesenkt und nach Erreichen von 90 °C Reaktorinnentemperatur wurde die Dosierung von 250,2 g 2-Hydroxyethylacrylat gestartet. Die Dosierungen der restlichen Propylenoxidmenge (780,0 g) und des 2-Hydroxyethylacrylats wurden so gestaltet, dass nach Ende der Dosierung des 2-Hydroxyethylacrylats noch 180 g Propylenoxid zu dosieren waren. Die Gesamtdosierzeit für das Propylenoxid betrug 4,03 h, gefolgt von einer Nachreaktionszeit von 0,4 h. Nach Ende der Nachreaktion wurde der Reaktorinhalt auf 100 °C aufgeheizt und bei dieser Temperatur 30 min. bei einem Druck (absolut) von 10 mbar ausgeheizt. Sodann wurde auf 80 °C abgekühlt und es wurden 0,612 g IRGANOX 1076$^®$ zugegeben. Die per Gelpermeationschromatographie (Polystyrolstandards) bestimmte zahlenmittlere Molmasse beträgt 678 Da, $M_w/M_n$ = 1,20. Die berechnete OH-Zahl betrug 112 mg KOH / g.

**Beispiel 1 e) (Schritt I des erfindungsgemäßen Verfahrens)**

Unter Stickstoffatmosphäre wurden in einen 2 l Laborautoklaven 119,9 g des Produktes aus Beispiel 1d), 0,036 g DMC-Katalysator und 0,305 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Dann wurden, beginnend bei 130 °C und Rühren mit 800 U/min., zunächst 50 g Propylenoxid mit 230 g / h eindosiert, wobei direkt nach Dosierbeginn bereits ein aktiver DMC-Katalysator beobachtet wurde. Innerhalb der Dosierung dieser ersten 5 0 g Propylenoxid wurde die Reaktionstemperatur von 130 °C auf 90 °C gesenkt und nach Erreichen von 90 °C Reaktorinnentemperatur wurde die Dosierung von 250,2 g 2-Hydroxyethylacrylat gestartet. Die Dosierungen der restlichen Propylenoxidmenge (779,9 g) und des 2-Hydroxyethylacrylats wurden so gestaltet, dass nach Ende der Dosierung des 2-Hydroxyethylacrylats noch 176 g Propylenoxid zu dosieren waren. Die Gesamtdosierzeit für das Propylenoxid betrug 4,02 h, gefolgt von einer Nachreaktionszeit von 0,33 h. Nach Ende der Nachreaktion wurde der Reaktorinhalt auf 100 °C aufgeheizt und bei dieser Temperatur 30 min. bei einem Druck (absolut) von 10 mbar ausgeheizt. Sodann wurde auf 80 °C abgekühlt und es wurden 0,626 g IRGANOX 1076$^®$ zugegeben. Die per Gelpermeationschromatographie (Polystyrolstandards) bestimmte zahlenmittlere Molmasse beträgt 675 Da, $M_w/M_n$ = 1,19. Die berechnete OH-Zahl betrug 112 mg KOH / g.

Ausgehend vom Produkt des Beispiels 1 d) wurde die Herstellung des Produktes nach Beispiel 1 e) noch mehrere Male wiederholt.

**Beispiel 1 f) (Schritt I des erfindungsgemäßen Verfahrens)**

Unter Stickstoffatmosphäre wurden in einen 2 l Laborautoklaven 120 g des Produktes aus Beispiel 1e), 0,041 g DMC-Katalysator und 0,307 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Dann wurden, beginnend bei 130 °C und Rühren mit 800 U/min., zunächst 60 g eines Gemisches aus 70 Gew.-% Ethylenoxid und 30 Gew.-% Propylenoxid mit 240 g / h eindosiert, wobei direkt nach Dosierbeginn bereits ein aktiver DMC-Katalysator beobachtet wurde. Innerhalb der Dosierung dieser ersten 60 g des Alkylenoxidgemisches wurde die Reaktionstemperatur von 130 °C auf 90 °C gesenkt und nach Erreichen von 90 °C Reaktorinnentemperatur wurde die Dosierung von 111,2 g 2-Hydroxyethylacrylat gestartet. Die Dosierungen der restlichen Menge des Alkylenoxidgemisches (908,9 g) und des 2-Hydroxyethylacrylats wurden so gestaltet, dass die Dosierung des 2-Hydroxyethylacrylats und die des Alkylenoxidgemisches gleichzeitig endeten. Die Gesamtdosierzeit für das Alkylenoxidgemisch betrug 4,0 h, gefolgt von einer Nachreaktionszeit von 0,55 h. Nach Ende der Nachreaktion wurde der Reaktorinhalt bei 90 °C 90 min. bei einem Druck (absolut) von 10 mbar ausgeheizt. Sodann wurde auf 80 °C abgekühlt und es wurden 0,605 g IRGANOX 1076$^®$ zugegeben. Die per Gelpermeationschromatographie (Polystyrolstandards) bestimmte zahlenmittlere Molmasse beträgt 1379 Da, $M_w/M_n$ = 1,32. Die berechnete OH-Zahl betrug 56 mg KOH / g.

**Beispiel 1 g) (Schritt I des erfindungsgemäßen Verfahrens)**

Unter Stickstoffatmosphäre wurden in einen 2 l Laborautoklaven 120 g des Produktes aus Beispiel 1f), 0,039 g DMC-Katalysator und 0,321 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Dann wurden, beginnend bei 130 °C und Rühren mit 800 U/min., zunächst 93 g eines Gemisches aus 70 Gew.-% Ethylenoxid und 30 Gew.-% Propylenoxid mit 240 g / h eindosiert, wobei direkt nach Dosierbeginn bereits ein aktiver DMC-Katalysator beobachtet wurde. Innerhalb der Dosierung dieser ersten 93 g des Alkylenoxidgemisches wurde die Reaktionstemperatur von 130 °C auf 90 °C gesenkt und nach Erreichen von 90 °C Reaktorinnentemperatur wurde die Dosierung von 125,2 g 2-Hydroxyethylacrylat gestartet. Die Dosierungen der restlichen Menge des Alkylenoxidgemisches (908,9 g) und des 2-Hydroxyethylacrylats wurden so gestaltet, dass nach Ende der Dosierung des 2-Hydroxyethylacrylats noch 181 g des Alkylenoxidgemisches zu dosieren waren. Die Gesamtdosierzeit für das Alkylenoxidgemisch betrug 4,03 h, gefolgt von einer Nachreaktionszeit von 0,33 h. Nach Ende der Nachreaktion wurde der Reaktorinhalt bei 90 °C 60 min. bei einem Druck (absolut) von 10 mbar ausgeheizt. Sodann wurde auf 80 °C abgekühlt und es wurden 0,610 g IRGANOX 1076® zugegeben. Die per Gelpermeationschromatographie (Polystyrolstandards) bestimmte zahlenmittlere Molmasse beträgt 1379 Da, $M_w/M_n$ = 1,42. Die berechnete OH-Zahl betrug 56 mg KOH / g. Ausgehend vom Produkt des Beispiels 1 f) wurde die Herstellung des Produktes nach Beispiel 1 g) noch mehrere Male wiederholt.

**Beispiel 1 h) (Schritt I des erfindungsgemäßen Verfahrens)**

Unter Stickstoffatmosphäre wurden in einen 2 1 Laborautoklaven 500 g des Produktes aus Beispiel 1g), 0,032 g DMC-Katalysator und 0,258 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Es wurden sodann beginnend bei 130 °C und Rühren mit 800 U/min. 500 g eines Gemisches aus 30 Gew.-% Propylenoxid und 70 Gew.-% Ethylenoxid mit 131 g / h eindosiert, wobei direkt nach Dosierbeginn bereits ein aktiver DMC-Katalysator beobachtet wurde. Innerhalb der ersten 10 min. der Alkylenoxidgemischdosierphase wurde die Reaktionstemperatur von 130 °C auf 90 °C gesenkt; bis zum Ende der Alkylenoxidzudosierung wurde diese Temperatur beibehalten. Die Gesamtdosierzeit für das Alkylenoxidgemisch betrug 3,82 h, gefolgt von einer Nachreaktionszeit von 0,5 h. Nach Ende der Nachreaktion wurde der Reaktorinhalt bei 90 °C 30 min. bei einem Druck (absolut) von 10 mbar ausgeheizt. Sodann wurde auf 80 °C abgekühlt und es wurden 0,532 g IRGANOX 1076® zugegeben. Die per Gelpermeationschromatographie (Polystyrolstandards) bestimmte zahlenmittlere Molmasse beträgt 3477 Da, $M_w/M_n$ = 1,13. Die berechnete OH-Zahl betrug 28 mg KOH / g.

**Beispiel 1 i) (Schritt I des erfindungsgemäßen Verfahrens)**

Unter Stickstoffatmosphäre wurden in einen 2 1 Laborautoklaven 120,1 g des Produktes aus Beispiel 1e), 0,036 g DMC-Katalysator und 0,319 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Dann wurden, beginnend bei 130 °C und Rühren mit 800 U/min., zunächst 50 g eines Gemisches aus 70 Gew.-% Ethylenoxid und 30 Gew.-% Propylenoxid mit 210 g / h in den Kopfraum (Gasdom) des Reaktors eindosiert, wobei direkt nach Dosierbeginn bereits ein aktiver DMC-Katalysator beobachtet wurde. Innerhalb der Dosierung dieser ersten 50 g Propylenoxid wurde die Reaktionstemperatur von 130 °C auf 90 °C gesenkt und nach Erreichen von 90 °C Reaktorinnentemperatur wurde die Dosierung von 250,2 g 2-Hydroxyethylacrylat gestartet. Die Dosierungen der restlichen Menge des Alkylenoxidgemisches (778,7 g) und des 2-Hydroxyethylacrylats wurden so gestaltet, dass nach Ende der Dosierung des 2-Hydroxyethylacrylats noch 180 g Alkylenoxidgemisch zu dosieren waren. Die Gesamtdosierzeit für das Alkylenoxidgemisch betrug 3,95 h, gefolgt von einer Nachreaktionszeit von 0,33 h. Nach Ende der Nachreaktion wurde der Reaktorinhalt bei 90 °C 30 min. bei einem Druck (absolut) von 10 mbar ausgeheizt. Sodann wurde auf 80 °C abgekühlt und es wurden 0,608 g IRGANOX 1076® zugegeben. Die berechnete OH-Zahl betrug 112 mg KOH / g.

**Beispiel 1 i) (Schritt I des erfindungsgemäßen Verfahrens)**

Unter Stickstoffatmosphäre wurden in einen 2 Laborautoklaven 120,1 g des Produktes aus Beispiel 1i), 0,037 g DMC-Katalysator und 0,338 g Phenothiazin gegeben. Der Inhalt des Autoklaven wurde sodann 30 min. bei 130 °C und Rühren mit 800 U/min. (Propellerrührer) im Vakuum bei einem absoluten Druck von 100 bis 120 mbar unter Einleiten von 50 ml Stickstoff pro Minute über einen am Reaktorboden befindlichen Verteilerring gestrippt. Dann wurden, beginnend bei 130 °C und Rühren mit 800 U/min., zunächst 50 g eines Gemisches aus 70 Gew.-% Ethylenoxid und 30 Gew.-% Propylenoxid mit 210 g / h in den Kopfraum (Gasdom) des Reaktors eindosiert, wobei direkt nach Dosierbeginn bereits ein aktiver DMC-Katalysator beobachtet wurde. Innerhalb der Dosierung dieser ersten 50 g Propylenoxid wurde die Reaktionstemperatur von 130 °C auf 90 °C gesenkt und nach Erreichen von 90 °C Reaktorinnentemperatur wurde die Dosierung von 250,2 g 2-Hydroxyethylacrylat gestartet. Die Dosierungen der restlichen Menge des Alkylenoxidgemisches (777,2 g) und des 2-Hydroxyethylacrylats wurden so gestaltet, dass nach Ende der Dosierung des 2-Hydroxyethylacrylats noch 180 g Alkylenoxidgemisch zu dosieren waren. Die Gesamtdosierzeit für das Alkylenoxidgemisch betrug 3,95 h, gefolgt von einer Nachreaktionszeit von 0,33 h. Nach Ende der Nachreaktion wurde der Reaktorinhalt bei 90 °C 30 min. bei einem Druck (absolut) von 10 mbar ausgeheizt. Sodann wurde auf 80 °C abgekühlt und es wurden 0,613 g IRGANOX 1076® zugegeben. Die per Gelpermeationschromatographie (Polystyrolstandards) bestimmte zahlenmittlere Molmasse beträgt 690 Da, $M_w/M_n$ = 1,21. Die berechnete OH-Zahl betrug 112 mg KOH / g.

Ausgehend vom Produkt des Beispiels 1 i) wurde die Herstellung des Produktes nach Beispiel 1 j) noch einmal wiederholt.

**Beispiel 1 k) (Vergleichsversuch zu Schritt I des erfindungsgemäßen Verfahrens)**

In einem 2-L-Vierhalskolben ausgestattet mit Heizpilz, mechanischem Rührwerk, 60 cm-Füllkörper-Kolonne mit Kolonnenkopf, Kopfthermometer, absteigendem Kühler, Thiele-Anschütz-Aufsatz, Tropftrichter, Gas-Einleitrohr und Thermometer, wurden 900 g Polyol 2 vorgelegt und über einen Zeitraum von 2 Stunden bei 100 °C und 0,01 mbar im Ölpumpenvakuum entwässert. Nach Belüftung mit Stickstoff wurden 134 mg Hydrochinonmonomethylether und 0,9 g Titantetrabutylat zugegeben und das Reaktionsgemisch auf 150 °C erwärmt. Man leitete Luft in das Reaktionsgemisch ein. Im Verlauf von ca. 20 Minuten wurden 269 g (3,125 mol) Acrylsäuremethylester zugetropft. Man senkte die Sumpftemperatur soweit ab (ca. 110 °C), dass Methanol bei einer Kopftemperatur von maximal 65 ° C abdestillierte. Nach ca. 90 Minuten wurde die Sumpftemperatur langsam im Verlauf von ca. 2 Stunden bis auf zuletzt 160 °C erhöht, wobei die theoretisch zu erwartende Methanolmenge nicht erreicht wurde. Bei Erreichen einer Sumpftemperatur von 160 °C vernetzte der Ansatz, so dass der Rührer zum Stillstand kam. Das Reaktionsgemisch musste verworfen werden. Der Versuch verdeutlicht die generellen Probleme, die nach dem Stand der Technik auftreten können.

**Beispiel 2 a) (Schritt II des erfindungsgemäßen Verfahrens)**

308,3 g des Produktes aus Beispiel 1b) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 59,88 g Hexylamin in den Tropftrichter gegeben. Nach Aufheizen des Glaskolbeninhalts auf 30 °C (Heizpilz) wurde das Hexylamin innerhalb von 25 min. zugetropft, wobei die Glaskolbeninnentemperatur mit Hilfe eines Wasserbades auf 30 °C gehalten wurde. Nach Ende der Zugabe des Hexylamins wurde noch 10 h bei 30 °C gerührt, danach wurde das Reaktionsgemisch bei 30 °C über einen Zeitraum von 2 Stunden im Wasserstrahlpumpenvakuum ausgeheizt. Das Produkt weist eine OH-Zahl von 87 mg KOH / g und eine Aminzahl von 89 mg KOH / g auf.

**Beispiel 2 b) (Schritt II des erfindungsgemäßen Verfahrens)**

300,33 g des Produktes aus Beispiel 1b) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 58,84 g N,N-dimethyl-1,3-diaminopropan in den Tropftrichter gegeben. Nach Aufheizen des Glaskolbeninhalts auf 30 °C (Heizpilz) wurde das N,N-dimethyl-1,3-diaminopropan innerhalb von 28 min. zugetropft, wobei die Glaskolbeninnentemperatur mit Hilfe eines Wasserbades auf 30 °C gehalten wurde. Nach Ende der Zugabe des N,N-dimethyl-1,3-diaminopropans wurde noch 4 h bei 30 °C gerührt, danach wurde das Reaktionsgemisch bei 30 °C über einen Zeitraum von 2 Stunden im Wasserstrahlvakuum ausgeheizt. Das Produkt weist eine OH-Zahl von 89 mg KOH / g und eine Aminzahl von 178 mg KOH / g auf, wobei die Hälfte der Aminzahl der vorhandenen tertiären Aminogruppe zuzurechnen ist.

**Beispiel 2 c) (Schritt II des erfindungsgemäßen Verfahrens)**

501,4 g des Produktes aus Beispiel 1c) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 179,9 g Aminopropyltrimethoxysilan in den Tropftrichter gegeben. Das Zutropfen des Aminopropyltrimethoxysilan wurde bei Raumtemperatur (23 °C) begonnen, mit Hilfe eines Wasserbades wurde die Glaskolbeninnentemperatur < 30 °C gehalten. Die Zugabedauer des Aminopropyltrimethoxysilans betrug 53 min. Danach wurde noch 8 h bei 30 °C gerührt.

**Beispiel 2 d) (Schritt II des erfindungsgemäßen Verfahrens)**

1002 g des Produktes aus Beispiel 1e) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurde im Stickstoffgegenstrom eine Lösung von 116,45 g Hexamethylendiamin in 260 g Toluol in den Tropftrichter gegeben. Nach Aufheizen des Glaskolbeninhalts auf 30 °C (Heizpilz) wurde die Lösung innerhalb von 90 min. zugetropft, wobei die Glaskolbeninnentemperatur mit Hilfe eines Wasserbades auf 30 °C gehalten wurde. Nach Ende der Zugabe der Hexamethylendiaminlösung wurde noch 8 h bei 30 °C gerührt. Sodann wurde bei 80 °C das Toluol im Wasserstrahlpumpenvakuum abdestilliert, anschließend wurde das Produkt bei 80 °C noch über einen Zeitraum von 3 h bei 1 mbar ausgeheizt. Das Produkt weist eine OH-Zahl von 95,5 mg KOH / g und eine Aminzahl von 96 mg KOH / g auf.

**Beispiel 2 e) (Schritt II des erfindungsgemäßen Verfahrens)**

1007,8 g des Produktes aus Beispiel 1e) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 212,34 g Bis-(4-aminocyclohexyl)-methan in den Tropftrichter gegeben. Nach Aufheizen des Glaskolbeninhalts auf 30 °C (Heizpilz) wurde das Bis-(4-aminocyclohexyl)-methan innerhalb von 60 min. zugetropft, wobei die Glaskolbeninnentemperatur mit Hilfe eines Wasserbades auf 30 °C gehalten wurde. Nach Ende der Zugabe des Bis-(4-aminocyclohexyl)-methans wurde noch 8 h bei 30 °C gerührt. Anschließend wurde das Produkt bei 80 °C über einen Zeitraum von 3 h bei 1 mbar ausgeheizt. Das Produkt weist eine OH-Zahl von 93 mg KOH / g und eine Aminzahl von 92 mg KOH / g auf.

**Beispiel 2 f) (Schritt II des erfindungsgemäßen Verfahrens)**

1000,1 g des Produktes aus Beispiel 1e) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 239,0 g Bis-(4-amino-3-methylcyclohexyl)-methan in den Tropftrichter gegeben. Nach Aufheizen des Glaskolbeninhalts auf 30 °C (Heizpilz) wurde das Bis-(4-amino-3-methylcyclohexyl)-methan innerhalb von 94 min. zugetropft, wobei die Glaskolbeninnentemperatur mit Hilfe eines Wasserbades auf 30 °C gehalten wurde. Nach Ende der Zugabe des Bis-(4-amino-3-methylcyclohexyl)-methans wurde noch 16 h bei 30 °C gerührt. Anschließend wurde das Produkt bei 80 °C über einen Zeitraum von 3 h bei 1 mbar ausgeheizt. Das Produkt weist eine OH-Zahl von 90,6 mg KOH / g und eine Aminzahl von 91 mg KOH / g auf.

**Beispiel 2 g) (Schritt II des erfindungsgemäßen Verfahrens)**

1000,0 g des Produktes aus Beispiel 1e) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 116,55 g 2-Methyl-1,5-diaminopentan in den Tropftrichter gegeben. Nach Aufheizen des Glaskolbeninhalts auf 30 °C (Heizpilz) wurde das 2-Methyl-1,5-diaminopentan innerhalb von 58 min. zugetropft, wobei die Glaskolbeninnentemperatur mit Hilfe eines Wasserbades auf 30 °C gehalten wurde. Nach Ende der Zugabe des 2-Methyl-1,5-diaminopentans wurde noch 16 h bei 30 °C gerührt. Anschließend wurde das Produkt bei 80 °C über einen Zeitraum von 3 h bei 1 mbar ausgeheizt. Das Produkt weist eine OH-Zahl von 96 mg KOH / g und eine Aminzahl von 99 mg KOH / g auf.

**Beispiel 2 h) (Schritt II des erfindungsgemäßen Verfahrens)**

1191,5 g des Produktes aus Beispiel 1g) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 116,08 g N,N-dimethyl-1,3-diaminopropan in den Tropftrichter gegeben. Nach Aufheizen des Glaskolbeninhalts auf 30 °C (Heizpilz) wurde das N,N-dimethyl-1,3-diaminopropan innerhalb von 50 min. zugetropft, wobei die Glaskolbeninnentemperatur mit Hilfe eines Wasserbades auf 30 °C gehalten wurde. Nach Ende der Zugabe des N,N-dimethyl-1,3-diaminopropans wurde noch 8 h bei 30 °C gerührt. Anschließend wurde das Produkt bei 30 °C über einen Zeitraum von 2 h bei 1 mbar

ausgeheizt. Das Produkt weist eine OH-Zahl von 48 mg KOH / g und eine Aminzahl von 97 mg KOH / g auf, wobei die Hälfte der Aminzahl der vorhandenen tertiären Aminogruppe zuzurechnen ist.

**Beispiel 2 i) (Schritt 11 des erfindungsgemäßen Verfahrens)**

1189,8 g des Produktes aus Beispiel 1g) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 82,88 g n-Butylamin in den Tropftrichter gegeben. Nach Aufheizen des Glaskolbeninhalts auf 30 °C (Heizpilz) wurde das n-Butylamin innerhalb von 35 min. zugetropft, wobei die Glaskolbeninnentemperatur mit Hilfe eines Wasserbades auf 30 °C gehalten wurde. Nach Ende der Zugabe des n-Butylamins wurde noch 8 h bei 30 °C gerührt. Anschließend wurde das Produkt bei 30 °C über einen Zeitraum von 2 h bei 1 mbar ausgeheizt. Das Produkt weist eine OH-Zahl von 49 mg KOH / g und eine Aminzahl von 50 mg KOH / g auf.

**Beispiel 2 i) (Schritt 11 des erfindungsgemäßen Verfahrens)**

972,6 g des Produktes aus Beispiel 1h) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 47,78 g N,N-dimethyl-1,3-diaminopropan in den Tropftrichter gegeben. Nach Aufheizen des Glaskolbeninhalts auf 30 °C (Heizpilz) wurde das N,N-dimethyl-1,3-diaminopropan innerhalb von 22 min. zugetropft, wobei die Glaskolbeninnentemperatur mit Hilfe eines Wasserbades auf 30 °C gehalten wurde. Nach Ende der Zugabe des N,N-dimethyl-1,3-diaminopropans wurde noch 8 h bei 30 °C gerührt. Anschließend wurde das Produkt bei 30 °C über einen Zeitraum von 3 h bei 1 mbar ausgeheizt. Das Produkt weist eine OH-Zahl von 26 mg KOH / g und eine Aminzahl von 51 mg KOH / g auf, wobei die Hälfte der Aminzahl der vorhandenen tertiären Aminogruppe zuzurechnen ist.

**Beispiel 2 k) (Schritt II des erfindungsgemäßen Verfahrens)**

1146,8 g des Produktes aus Beispiel 1j) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 160,23 g n-Butylamin in den Tropftrichter gegeben. Nach Aufheizen des Glaskolbeninhalts auf 30 °C (Heizpilz) wurde das n-Butylamin innerhalb von 70 min. zugetropft, wobei die Glaskolbeninnentemperatur mit Hilfe eines Wasserbades auf 30 °C gehalten wurde. Nach Ende der Zugabe des n-Butylamins wurde noch 8 h bei 30 °C gerührt. Anschließend wurde das Produkt bei 30 °C über einen Zeitraum von 2 h bei 1 mbar ausgeheizt. Das Produkt weist eine OH-Zahl von 94 mg KOH / g und eine Aminzahl von 93 mg KOH / g auf.

**Beispiel 2 l) (Schritt II des erfindungsgemäßen Verfahrens)**

1163,5 g des Produktes aus Beispiel 1j) wurden in einen Glasrundkolben mit aufgesetztem Rückflusskühler, Rührmotor mit Rührer und Tropftrichter eingewogen. Nach dreimaligem Luft- / Stickstoffaustausch, also dreimaligem Evakuieren auf ca 10 mbar und Druckausgleich mit Stickstoff, wurden im Stickstoffgegenstrom 226,62 g N,N-dimethyl-1,3-diaminopropan in den Tropftrichter gegeben. Nach Aufheizen des Glaskolbeninhalts auf 30 °C (Heizpilz) wurde das N,N-dimethyl-1,3-diaminopropan innerhalb von 67 min. zugetropft, wobei die Glaskolbeninnentemperatur mit Hilfe eines Wasserbades auf 30 °C gehalten wurde. Nach Ende der Zugabe des N,N-dimethyl-1,3-diaminopropans wurde noch 8 h bei 30 °C gerührt. Anschließend wurde das Produkt bei 30 °C über einen Zeitraum von 2 h bei 1 mbar ausgeheizt. Das Produkt weist eine OH-Zahl von 90 mg KOH / g und eine Aminzahl von 178 mg KOH / g auf, wobei die Hälfte der Aminzahl der vorhandenen tertiären Aminogruppe zuzurechnen ist.

**Patentansprüche**

1. Verfahren zur Herstellung eines $\omega$-Hydroxy-Aminopolymers umfassend die Schritte

   (I) Addition eines Epoxids an eine Starterverbindung S-I mit wenigstens einem aktiven Wasserstoffatom und wenigstens einer elektronenarmen Doppelbindung in Gegenwart eines Doppelmetallcyanid-Katalysators;
   (II) Umsetzung desin Schritt (I) erhaltenen Additionsprodukts P-I mit einem primären Amin.

2. Verfahren nach Anspruch 1, wobei die Starterverbindung S-I wenigstens eine olefinische Doppelbindung enthält, die sich in Konjugation mit einer oder mehreren elektronenziehenden funktionellen Gruppen vom Carbonyl-, Carbonsäureester-, Carbonsäureamid-, Carbonsäure-, Nitro- oder Nitriltyp befindet.

3. Verfahren nach Anspruch 1 oder 2 , wobei die Starterverbindung S-I ausgewählt ist aus wenigstens einem Mitglied der Gruppe bestehend aus Hydroxyethylacrylat, Hydroxyethylmethacrylat, Hydroxypropylacrylat und Hydroxypropylmethacrylat.

**4.** Verfahren nach einem der Ansprüche 1 bis 3, wobei vor oder während der Durchführung von Schritt (I) ein Polymerisationsinhibitor zugesetzt wird.

**5.** Verfahren nach Anspruch 4, wobei als Polymerisationsinhibitor Phenothiazin eingesetzt wird.

**6.** Verfahren nach einem Ansprüche 1 bis 6, wobei das Epoxid 2 bis 24 Kohlenstoffatome enthält.

**7.** Verfahren nach Anspruch 6, wobei als Epoxid wenigstens ein Epoxid aus der Gruppe bestehend aus Ethylenoxid und Propylenoxid eingesetzt wird.

**8.** Verfahren nach einem der Ansprüche 1 bis 7, wobei in Schritt (I) zusätzlich zum Epoxid wenigstens ein Co-Monomer eingesetzt wird, welches ausgewählt ist aus der Gruppe bestehend aus Lactonen, Lactiden, Carbonsäureanhydriden, cyclischen Carbonaten, Kohlendioxid und Mischungen zweier oder mehrerer der genannten Co-Monomere.

**9.** Verfahren nach einem der Ansprüche 1 bis 8, wobei in Schritt (I) zunächst die Starterverbindung S-I und der Doppelmetallcyanid-Katalysator vorgelegt werden und anschließend das Epoxid hinzugefügt wird.

**10.** Verfahren nach einem der Ansprüche 1 bis 8, wobei in Schritt (I) ein H-funktionelles Starterpolyol S-Ia und der Doppelmetallcyanid -Katalysator vorgelegt werden und die Starterverbindung S-I kontinuierlich gemeinsam mit dem Epoxid zudosiert wird, wobei das H-funktionelle Starterpolyol S-Ia eine OH-Zahl im Bereich von 3,000 mg KOH/g bis 1000 mg KOH/g aufweist.

**11.** Verfahren nach Anspruch 10, wobei als H-funktionelles Starterpolyol S-Ia ein gemäß Schritt (I) hergestelltes Additionsprodukt P-I eingesetzt wird.

**12.** Verfahren nach einem der Ansprüche 1 bis 8, wobei in Schritt (I) ein H-funktionelles Starterpolyol S-Ia und eine Teilmenge des Doppelmetallcyanid-Katalysators vorgelegt werden, und dann die Starterverbindung S-I sowie weiterer Doppelmetallcyanid-Katalysator gemeinsam mit dem Epoxid kontinuierlich zugeführt werden, wobei das hierbei entstandene Additionsprodukt P-I des Schritts (I) kontinuierlich dem Reaktorsystem nach einer vorwählbaren mittleren Verweilzeit entnommen wird.

**13.** ω-Hydroxy-Aminopolymer, erhältlich nach einem Verfahren gemäß einem der Ansprüche 9 bis 12

**14.** Verwendung eines ω-Hydroxy-Aminopolymers nach Anspruch 13 zur Herstellung eines Polyurethanharnstoffpolymers.

**15.** Polyurethanharnstoffpolymer, erhältlich durch Umsetzung eines Polyisocyanats mit einem ω-Hydroxy-Aminopolymer nach Anspruch 13.

EP 2 671 893 A1

**EUROPÄISCHER RECHERCHENBERICHT**

Nummer der Anmeldung

EP 12 17 0955

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X<br>Y | EP 0 046 088 A1 (MITSUI TEXACO CHEM [JP])<br>17. Februar 1982 (1982-02-17)<br>* Seite 1, Zeile 32 - Seite 4, Zeile 3;<br>Ansprüche; Beispiele 1-31 *<br>----- | 13-15<br><br>1-12 | INV.<br>C08F8/32<br>C08F290/06<br>C08G18/50<br>C08G18/32 |
| Y,D | WO 99/10407 A1 (ARCO CHEM TECH [US]; ARCO<br>CHEM TECH NL BV [NL])<br>4. März 1999 (1999-03-04)<br>* Seite 1, Absatz 1 *<br>* Seite 3, Absatz 3 - Seite 20, Absatz 3;<br>Ansprüche; Beispiele *<br>----- | 1-15 | C08G18/38<br>C08G65/26 |
| X<br>Y | US 2008/202382 A1 (CARLBLOM LELAND H [US]<br>ET AL) 28. August 2008 (2008-08-28)<br>* Absätze [0001], [0006] - [0009],<br>[0042] - [0069]; Ansprüche; Beispiele 2-4<br>*<br>----- | 13-15<br><br>1-12 | |
| X<br>Y | EP 0 731 121 A2 (BASF AG [DE])<br>11. September 1996 (1996-09-11)<br>* Seite 2, Zeilen 3-42 *<br>* Seite 3, Zeile 3 - Seite 4, Zeile 38;<br>Ansprüche; Beispiele 2-6 *<br>----- | 13-15<br><br>1-12 | RECHERCHIERTE SACHGEBIETE (IPC)<br><br>C08F<br>C08G |
| Y | EP 1 600 468 A1 (BAYER MATERIALSCIENCE LLC<br>[US]) 30. November 2005 (2005-11-30)<br>* Absätze [0001], [0007] - [0031];<br>Ansprüche *<br>----- | 1-15 | |

Der vorliegende Recherchenbericht wurde für alle Patentansprüche erstellt

| Recherchenort | Abschlußdatum der Recherche | Prüfer |
|---|---|---|
| München | 10. September 2012 | Otegui Rebollo, Juan |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 12 17 0955

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-09-2012

| Im Recherchenbericht angeführtes Patentdokument | Datum der Veröffentlichung | Mitglied(er) der Patentfamilie | Datum der Veröffentlichung |
|---|---|---|---|
| EP 0046088 A1 | 17-02-1982 | AU 547172 B2 | 10-10-1985 |
| | | AU 7401081 A | 18-02-1982 |
| | | CA 1169089 A1 | 12-06-1984 |
| | | DE 3175758 D1 | 05-02-1987 |
| | | EP 0046088 A1 | 17-02-1982 |
| | | JP 57036115 A | 26-02-1982 |
| | | US 4431790 A | 14-02-1984 |
| WO 9910407 A1 | 04-03-1999 | AU 742676 B2 | 10-01-2002 |
| | | AU 9346298 A | 16-03-1999 |
| | | BR 9813009 A | 15-08-2000 |
| | | CA 2294359 A1 | 04-03-1999 |
| | | CN 1310735 A | 29-08-2001 |
| | | DE 69825168 D1 | 26-08-2004 |
| | | DE 69825168 T2 | 28-07-2005 |
| | | EP 1012203 A1 | 28-06-2000 |
| | | ES 2224433 T3 | 01-03-2005 |
| | | JP 2001514280 A | 11-09-2001 |
| | | TW 515811 B | 01-01-2003 |
| | | WO 9910407 A1 | 04-03-1999 |
| US 2008202382 A1 | 28-08-2008 | KEINE | |
| EP 0731121 A2 | 11-09-1996 | CA 2171264 A1 | 10-09-1996 |
| | | EP 0731121 A2 | 11-09-1996 |
| | | JP 8259660 A | 08-10-1996 |
| | | US 5734002 A | 31-03-1998 |
| | | US 5977284 A | 02-11-1999 |
| EP 1600468 A1 | 30-11-2005 | BR PI0502064 A | 11-04-2006 |
| | | CA 2508274 A1 | 27-11-2005 |
| | | CN 1702093 A | 30-11-2005 |
| | | DE 602005003397 T2 | 02-10-2008 |
| | | EP 1600468 A1 | 30-11-2005 |
| | | JP 2005336491 A | 08-12-2005 |
| | | KR 20060049461 A | 19-05-2006 |
| | | MX PA05005674 A | 30-11-2005 |
| | | US 2005267287 A1 | 01-12-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5739192 A
- US 5597390 A
- US 20050171002 A
- DE 9616984 A
- DE 19508308 A
- WO 2010090345 A
- JP 200922753 A
- JP 04089860 A
- WO 9910407 A
- WO 2008049471 A
- EP 1873186 A
- US 3404109 A
- US 3829505 A
- US 3941849 A
- US 5158922 A
- US 5470813 A
- EP 0700949 A
- EP 0743093 A
- EP 0761708 A
- WO 9740086 A
- WO 9816310 A
- WO 0047649 A

- WO 2011144523 A
- JP 4145123 A
- WO 0139883 A
- WO 0180994 A
- US 4987271 A
- DE 3132258 A
- EP 0406440 A
- US 5391722 A
- US 5099075 A
- US 4721818 A
- US 4877906 A
- EP 0385619 A
- US 3538043 A
- US 4500704 A
- US 5032671 A
- US 6646100 A
- EP 0222453 A
- WO 2008013731 A
- WO 9914258 A
- EP 1577334 A
- WO 9729146 A
- EP 0007502 A1

**In der Beschreibung aufgeführte Nicht-Patentliteratur**

- Ullmann's Encyclopedia of Industrial Chemistry. 1992, vol. B4, 167ff
- Handbuch Apparate. Vulkan-Verlag Essen, 1980, 188-208

- **W. SIEFKEN.** Justus Liebigs Annalen der Chemie. vol. 562, 75-136